# FASCICULE DE BREVET EUROPEEN

(11) **EP 0 783 839 B1**
(45) Date de publication et mention de la délivrance du brevet: **28.11.2001**
(21) Numéro de dépôt: 96200056.8
(22) Date de dépôt: 11.01.1996
(51) Int. Cl.: A22C 13/00

(54) **Sachet comestible et soluble dans l'eau chaude**
Heisswasserlöslicher essbarer Verpackungsbeutel
Hot-water-soluble edible packaging bag

(43) Date de publication de la demande: 16.07.1997
(73) Titulaire: SOCIETE DES PRODUITS NESTLE S.A., 1800 Vevey (CH)
(72) Inventeur: Wissgott, Ulrich, CH-1814 La Tour-de-Peilz (CH); Verschueren, Katrien, B-9100 Sint-Niklaas (BE)
(74) Mandataire: Thomas, Alain

(56) Documents cités:
- CH-A- 313 774
- FR-A- 1 260 250
- FR-A- 2 087 185
- FR-A- 2 443 979
- FR-A- 2 459 185
- US-A- 3 346 402

## Description

L'invention concerne un sachet comestible et soluble dans l'eau chaude et comprenant un produit alimentaire soluble.

Le brevet FR 1356099 concerne une pellicule ventilée d'emballage utilisée pour emballer par exemple des produits chimiques, comme de la poudre à lessive, ou du café ou du thé. La pellicule est faite notamment à partir de carboxyméthyle de cellulose (CMC), qui est un composé soluble dans l'eau. On peut ainsi préparer des doses directement utilisables sans nécessité d'ouverture préalable. L'inconvénient de l'utilisation de la CMC est que le film obtenu à partir de cette matière est cassant.

Le brevet FR 2 087 185 concerne un emballage sous forme de films ou pellicules pour le conditionnement de produits alimentaires, ledit emballage étant constitué essentiellement de gélatine.

Le but de la présente invention est de permettre la mise au point d'un sachet comestible et soluble dans l'eau destiné au domaine alimentaire à partir d'un film possédant de bonnes propriétés mécaniques. Par propriétés mécaniques, on entend un film qu'on peut bien manipuler par une machine et qui résiste aux opérations de formation, de remplissage et de transport. Il est caractérisé aussi bien par son élasticité que par sa thermoscellabilité. Cette dernière propriété est un grand avantage, car aucun agent n'est nécessaire pour coller les bordures.

La présente invention concerne un sachet comestible et soluble dans l'eau chaude et comprenant un produit alimentaire soluble disposé dans un film alimentaire, le dit film comprenant au moins 67% de carboxyméthylcellulose, au moins 10% de plastifiant et entre 0,5 et 2,5% de gélatine.

Par carboxyméthylcellulose, on entend de la CMC disponible dans le commerce. On peut utiliser la CMC à basse viscosité et à bas degré de substitution. La CMC est obtenue par substitution de l'hydrogène des groupements hydroxyles de la cellulose par des groupes carboxyméthyles, de préférence carboxyméthyle de sodium. On a utilisé la CMC, car c'est le produit qui donne le film le plus rapidement soluble dans l'eau chaude : sa dissolution est instantanée.

On peut selon l'invention disposer d'un sachet qu'on plonge dans de l'eau chaude et qui se dissout totalement. Il est bien entendu que tous les constituants de film doivent être acceptés dans le domaine alimentaire.

Le plastifiant est nécessaire pour conférer au sachet une bonne élasticité et la gélatine pour permettre que le film soit thermoscellable.

Le sachet contient le produit alimentaire et il est obtenu en recouvrant le produit alimentaire avec le film et en thermoscellant ce film sur sa bordure.

Comme plastifiant, on utilise des composés du groupe des polyols, comme le glycérol, le polyéthylène glycol, le propylène glycol ou le sorbitol. Le glycérol est le composé qu'on utilise de préférence.

La grandeur des sachets n'est pas critique, de même que la dose dudit sachet. Sa taille dépend de la quantité et de la densité de la poudre à fournir. Le terme sachet n'est pas limitatif pour sa forme. Elle peut être carrée, rectangulaire, ronde ou toute autre forme voulue. Le volume dépend de l'utilisation. L'épaisseur du film utilisé est comprise entre 30 et 100 microns. S'il est trop mince, il se déchirera trop vite et s'il est trop épais, il sera plus long à se dissoudre.

La gélatine est nécessaire pour rendre possible la fabrication d'un sachet étanche par thermoscellage. La gélatine permet en outre de faire ce thermoscellage en un temps compatible avec la cadence des lignes de remplissage actuellement sur le marché.

Le sachet selon l'invention contient tout type de produit alimentaire soluble dans l'eau, notamment le café en poudre, le thé en poudre, la soupe en poudre, le cacao en poudre ou n'importe quel autre ingrédient alimentaire en poudre, tel que du sel, du sucre, des épices ou assaisonnements. On peut régler la dose pour une tasse et s'agissant de soupe pour une personne. On peut également trouver une utilisation intéressante dans le domaine des machines automatiques de distribution de boissons : il serait possible d'avoir des doses prêtes, ce qui éviterait les fluctuations de dosages dans de telles installations.

Le film utilisé, selon l'invention, contient au moins 67 % de CMC, au moins 10 % de plastifiant et entre 0,5 et 2,5 % de gélatine. Dans toute la présente description, les pourcentages sont donnés en poids. Il faut au moins 10 % de plastifiant pour que le film ait une bonne élasticité et une bonne résistance mécanique aux machines de traitement dudit film. Une teneur supérieure à 30 % donnerait un film graisseux et collant. La teneur préférée est de 20 %.

Dans une forme de réalisation préférée du film selon l'invention, le film contient 78,5 % de CMC, 1,5 % de gélatine et 20 % de glycérol.

Les ingrédients utilisés pour la fabrication du film n'ont aucune influence sur le produit alimentaire contenu dans le sachet, au moment de la dissolution dans l'eau chaude, à savoir sur sa couleur, sur son odeur et son goût et sur sa texture.

Le film est transparent, mais peut également être coloré ou aromatisé avec le constituant alimentaire adéquat, à savoir colorants et arômes alimentaires.

La bordure de scellage a une certaine largeur permettant de bien garantir l'étanchéité du sachet.

L'invention concerne également un procédé de fabrication d'un film utilisable pour le sachet comestible et soluble dans l'eau chaude tel que décrit ci-dessus. Selon le procédé, on met en suspension la CMC dans une solution d'eau et d'éthanol, on ajoute le plastifiant et la gélatine, on applique la solution sur une surface plane et on évapore l'eau et l'éthanol, de manière à ce que le film obtenu comprenne, en poids, au moins 67% de carboxyméthylcellulose, au moins 10% de plastifiant et entre 0,5 et 2,5% de gélatine.

La présence d'éthanol est critique, car elle permet la formation d'un réseau qui est essentiel pour les propriétés du film obtenu. Avec une teneur en éthanol de moins de 25 %, ( par rapport au poids global de la solution, eau comprise) on obtient un film de CMC qui a un trop fort retrait. Par contre si la teneur en alcool est supérieure à 50%, la CMC a des difficultés pour se dissoudre. On a constaté qu'une teneur en éthanol de l'ordre de 37-38 % donnait un film avec les meilleures propriétés barrière et mécaniques.

La poudre de CMC est ajoutée par petites quantités dans la solution aqueuse éthanolique à environ 60 °C et la solution est agitée jusqu'à dissolution. Ensuite, le plastifiant et la gélatine sont ajoutés et on obtient une solution incolore et transparente. La solution est versée sur une surface non adhésive et séchée à une température comprise entre 30 et 55 °C sous vide. Le film peut être coloré ou aromatisé par addition dans la solution éthanolique de colorants ou d'arômes, pour des applications spécifiques. Par exemple, on peut colorer en brun et aromatiser avec de l'arôme de thé des films prévus pour l'emballage de poudre de thé.

Lorsque le film est sec, on le dispose sur une machine permettant l'ensachage du produit alimentaire soluble et le thermo-scellage : on arrive ainsi à obtenir des sachets prêts à l'emploi à une cadence industrielle, à savoir 3600 sachets/heure. On opère soit sur une ensacheuse verticale, soit sur une ensacheuse horizontale.

La suite de la description est faite en référence à l'exemple ci-dessous.

### Exemple

On dissout 5,9 g de CMC dans 35 g d'éthanol et 57,5 g d'eau. On y ajoute ensuite 1,5 g de polyéthylène glycol et 0,1 g de gélatine. On dépose ensuite cette solution sur une surface non adhésive et on sèche à une température de 45°C sous un vide de 400 torr pendant 40 minutes. On obtient un film ayant une épaisseur de 50 microns.

Le film ainsi obtenu est disposé sur une machine de dosage et d'ensachage pour faire des sachets de 0,5 g de thé soluble. On fabrique ainsi des sachets de 2 cm de côté : la machine comporte également un système de thermo-scellage opérant à 80 °C, la durée de scellage étant de 1 seconde.

Le sachet ainsi fabriqué est ensuite disposé dans une tasse et on y verse 150 ml d'eau chaude. Le sachet de thé se désintègre immédiatement, libérant la poudre de thé.Le sachet de thé et la poudre continuent alors à se dissoudre simultanément. Plus aucune trace du sachet ne reste. La couleur du thé ainsi préparé est la même que celle de la référence. Une dégustation effectuée ne permet pas de déceler de différence par rapport au goût.

## Revendications

1. Sachet comestible et soluble dans l'eau chaude et comprenant un produit alimentaire soluble disposé dans un film alimentaire, **caractérisé en que** ledit film comprend, en poids, au moins 67% de carboxyméthylcellulose, au moins 10% de plastifiant et entre 0,5 et 2,5% de gélatine.

2. Sachet selon la revendication 1, **caractérisé en ce que** le film recouvre le produit alimentaire soluble et est thermoscellé pour former ledit sachet.

3. Sachet selon l'une des revendications 1 ou 2, **caractérisé en ce que** le film contient comme plastifiant un composé choisi dans le groupe des polyols comme le glycérol et ses dérivés, le polyéthylène glycol, le propylène glycol et le sorbitol.

4. Sachet selon l'une des revendications 1 à 3, **caractérisé en ce que** le film a une épaisseur comprise entre 30 et 100 microns.

5. Sachet selon l'une des revendications 1 à 4, **caractérisé en ce que** le produit alimentaire soluble est choisi dans le groupe constitué par le café en poudre, le thé en poudre, la soupe en poudre, le cacao en poudre, le sel, le sucre, les épices, les assaisonnements.

6. Sachet selon l'une des revendications 1 à 5, **caractérisé en ce que** le film comprend, en poids, 78,5 % de carboxyméthylcellulose , 1,5 % de gélatine et 20 % de glycérol.

7. Procédé de fabrication d'un film utilisable dans le sachet comestible et soluble dans l'eau chaude selon l'une quelconque des revendications 1 à 6, **caractérisé en ce qu'**on dissout la carboxyméthylcellulose dans une solution d'eau et d'éthanol, on ajoute le plastifiant et la gélatine, on applique la solution sur une surface plane et on évapore l'eau et l'éthanol, de manière à ce que le film obtenu comprenne, en poids, au moins 67 % de carboxyméthylcellulose, au moins 10 % de plastifiant et entre 0,5 et 2,5 % de gélatine.

8. Procédé selon la revendication 7, **caractérisé en ce qu'**on utilise une solution d'eau et d'éthanol contenant entre 25 et 50 % d'éthanol.

## Claims

1. Hot water soluble edible sachet, comprising a soluble foodstuff disposed in an edible film, **characterized in that** the said film comprises, by weight, at least 67 % carboxymethylcellulose, at least 10 % plasticizer and between 0.5 and 2.5 % gelatin.

2. Sachet according to claim 1, **characterized in that** the film covers the soluble foodstuff and is heat-sealed to form the said sachet.

3. Sachet according to either of claims 1 or 2, **characterized in that** the film contains as a plasticizer a compound chosen from the group of polyols such as glycerol and its derivatives, polyethylene glycol, propylene glycol and sorbitol.

4. Sachet according to one of claims 1 to 3, **characterized in that** the film has a thickness of between 30 and 100 microns.

5. Sachet according to one of claims 1 to 4, **characterized in that** the soluble foodstuff is chosen from the group consisting of powdered coffee, powdered tea, powdered soup, powdered cocoa, salt, sugar, spices and seasoning.

6. Sachet according to one of claims 1 to 5, **characterized in that** the film comprises, by weight, 78.5 % carboxymethylcellulose, 1.5 % gelatin and 20 % glycerol.

7. Process for manufacturing a film which can be used in the hot water soluble edible sachet according to any one of claims 1 to 6, **characterized in that** the carboxymethylcellulose is dissolved in a solution of water and ethanol, the plasticizer and gelatin are added, the solution is applied to a flat surface and the water and ethanol are evaporated, so that the film obtained comprises by weight, at least 67 % carboxymethylcellulose, at least 10 % plasticizer and between 0.5 and 2.5 % gelatin.

8. Process according to claim 7, **characterized in that** a solution of water and ethanol is used containing between 25 and 50 % ethanol.

## Patentansprüche

1. Heißwasserlöslicher essbarer Verpackungsbeutel, der ein lösliches Nahrungsmittelprodukt enthält, das in einem Nahrungsmittelfilm angeordnet ist, **dadurch gekennzeichnet, dass** der Film, bezogen auf das Gewicht, mindestens 67% Carboxymethylcellulose, mindestens 10% Weichmacher und zwischen 0,5 und 2,5% Gelatine enthält.

2. Verpackungsbeutel nach Anspruch 1, **dadurch gekennzeichnet, dass** der Film das lösliche Nahrungsmittelprodukt bedeckt und zur Bildung des Verpackungsbeutels heißgesiegelt ist.

3. Verpackungsbeutel nach einem der Ansprüche 1 oder 2, **dadurch gekennzeichnet, dass** der Film als Weichmacher eine Verbindung enthält, die in der Gruppe der Polyole wie Glycerin und seine Derivate, Polyethylenglykol, Propylenglykol und Sorbitol ausgewählt ist.

4. Verpackungsbeutel nach einem der Ansprüche 1 bis 3, **dadurch gekennzeichnet, dass** der Film eine Dicke zwischen 30 und 100 Mikron aufweist.

5. Verpackungsbeutel nach einem der Ansprüche 1 bis 4, **dadurch gekennzeichnet, dass** das lösliche Nahrungsmittelprodukt aus der aus Kaffeepulver, Teepulver, Suppenpulver, Kakaopulver, Salz, Zucker, Gewürzen und Würzmitteln bestehenden Gruppe ausgewählt ist.

6. Verpackungsbeutel nach einem der Ansprüche 1 bis 5, **dadurch gekennzeichnet, dass** der Film, bezogen auf das Gewicht, 78% Carboxymethylcellulose, 1,5% Gelatine und 20% Glycerin enthält.

7. Verfahren zur Herstellung eines Films, der für den heißwasserlöslichen essbaren Verpackungsbeutel nach einem der Ansprüche 1 bis 6 verwendbar ist, **dadurch gekennzeichnet, dass** man Carboxymethylcellulose in einer Wasser- und Ethanollösung auflöst, der Weichmacher und die Gelatine zugibt, die Lösung auf eine ebene Fläche aufträgt und das Wasser und das Ethanol abdampft, so dass der erhaltene Film, bezogen auf das Gewicht, mindestens 67% Carboxymethylcelulose, mindestens 10% Plastiziermittel und zwischen 0,5 und 2,5% Gelatine enthält.

8. Verfahren nach Anspruch 7, **dadurch gekennzeichnet, dass** man eine Wasser- und Ethanollösung verwendet, die zwischen 25 und 50% Ethanol enthält.
